# EUROPÄISCHE PATENTANMELDUNG

(11) **EP 1 379 069 A1**
(43) Veröffentlichungstag der Anmeldung: **07.01.2004**
(21) Anmeldenummer: 02014626.2
(22) Anmeldetag: 02.07.2002
(51) Int. Cl.: H04N 1/17, G03B 27/80

(54) **Vorrichtung und Verfahren zum Erfassen von Bildinformationen einer Bildvorlage**

(71) Anmelder: Agfa-Gevaert AG, 51373 Leverkusen (DE)
(72) Erfinder: Haider, Peter, 82269 Geltendorf (DE); Lorenz, Bernhard, 85417 Marzling (DE); Ruf, Wolfgang, 81539 München (DE); Schindler, Hans-Georg, 83607 Holzkirchen (DE); Epple, Tobias, 82024 Taufkirchen (DE)

(57) **Zusammenfassung**

Es werden eine Vorrichtung (1) und ein Verfahren zum Erfassen von Bildinformationen einer Bildvorlage (5) vorgeschlagen. Licht zum Belichten der Bildvorlage (5) wird von einer Lichtquelle (10) ausgegeben. Licht, mit dem die Bildvorlage (5) belichtet wurde, wird anschließend von einem Lichtdetektor (28 - 30) detektiert. Das Erfassen der Bildinformationen der Bildvorlage (5) wird dabei von einem Steuermittel (31) gesteuert. Erfindungsgemäß legt das Steuermittel (31) einen bestimmten Zeitpunkt (T2 - T4, T8 - T10) in Abhängigkeit von einem zuvor ermittelten Parameter fest, der für die Bildvorlage (5) spezifisch ist. Der Lichtdetektor (28 - 30) wird zum Erfassen von Bildinformationen der Bildvorlage (5) zu dem bestimmten Zeitpunkt (T2 - T4, T8 - T10) von dem Steuermittel (31) angesteuert.

## Beschreibung

Die vorliegende Erfindung betrifft eine Vorrichtung und ein Verfahren gemäß des Oberbegriffs des Anspruchs 1 bzw. 14.

Eine solche Vorrichtung und ein solches Verfahren sind aus der europäischen Patentanmeldung EP 0 691 568 A1 bekannt. Diese Patentanmeldung beschreibt einen fotografischen Filmscanner, mit dem Bildinformationen von Bildvorlagen erfasst werden können. Mittels einer Lichtquelle wird der Film beleuchtet. Das durch den Film hindurchgehende Licht kann dann von einem Detektor aufgesammelt werden. Die von dem Detektor ermittelten Bildinformationen der einzelnen Bilder des Filmes werden dazu verwendet, charakteristische Eigenschaften des jeweiligen Bildes, wie z. B. die maximale und minimale Dichte, zu ermitteln. Diese ermittelten Eigenschaften der einzelnen Bilder des Filmes werden dann in einem nachfolgenden Belichtungsprozess, in dem das jeweilige Bild des Filmes auf Fotopapier aufbelichtet wird, zur Belichtungssteuerung eingesetzt. Der Detektor hat einen bestimmten Dynamikbereich, innerhalb dessen er in der Lage ist, die Bildinformationen des Bildes unverzerrt aufzunehmen. Gemäß der EP 0 691 568 A1 soll daher der Detektor so betrieben werden, dass dieser Dynamikbereich nicht verlassen wird. Dazu ist es notwendig, die Menge an Licht, die von dem Detektor aufgesammelt wird, einen bestimmten maximalen Grenzwert nicht überschreiten zu lassen. Dies soll durch eine entsprechende Ansteuerung der Lichtquelle erfolgen. Die Lichtquelle enthält eine Vielzahl von Leuchtdioden, die entsprechend angesteuert werden. Die Leuchtintensität und Leuchtdauer der einzelnen Leuchtdioden wird auf Grund der Vorgabe des Dynamikbereichs des Detektors eingestellt. Zum Einstellen der Leuchtintensität und der Leuchtdauer der einzelnen Leuchtdioden kann die spektrale Dichteverteilung des jeweiligen Bildes des Filmes verwendet werden.

Aus der vorveröffentlichten Patentanmeldung WO 97/02698 sind ebenfalls eine Vorrichtung und ein Verfahren zum Erfassen von Bildinformationen einer Bildvorlage bekannt. Gemäß dieser Patentanmeldung soll eine Kalibrierung der bekannten Vorrichtung durchgeführt werden. Lichtintensitätsschwankungen von Leuchtdioden, die als Lichtquelle zum Belichten der Bildvorlage verwendet werden, und Empfindlichkeitsschwankungen von Fotodetektoren, die Licht, das von der zu erfassenden Bildvorlage reflektiert wird, erfassen, sollen kompensiert werden. Zur Kompensation dieser Lichtintensitäts- und Empfindlichkeitsschwankungen findet zunächst eine Grobjustage statt, bei der die Leistung der Leuchtdioden der Lichtquelle und die Zeitdauer, während der die Leuchtdioden Licht ausgeben, variiert werden. Zur Bestimmung der für die Kompensation notwendigen Ansteuerungen zum Einstellen der Leistung der Leuchtdioden und deren Leuchtdauer sollen Teststreifen aus dunklem und hellem Grau erfasst werden. Aus dem Vergleich der durch diese Testbelichtungen erhaltenen Bildinformationen mit Sollwerten können Korrektureinstellungen berechnet werden. In einem zweiten Schritt erfolgt anschließend eine Feinjustage, indem für jedes Element des Fotodetektors zuvor abgespeicherte Korrekturwerte beim Erfassen der Bildinformationen der jeweiligen Bildvorlage mitverwendet werden. Diese Korrekturwerte werden ebenfalls durch zuvor durchgeführte Kompensationsversuche ermittelt. An Stelle der Variation der Leuchtdauer der Leuchtdioden zur Kompensation der Lichtintensitäts- und Empfindlichkeitsschwankungen kann auch die Empfangszeit der einzelnen Fotodetektorelemente variiert werden.

Ausgehend davon liegt der vorliegenden Erfindung die Aufgabe zu Grunde, eine Vorrichtung und ein Verfahren zum Erfassen von Bildinformationen einer Bildvorlage anzugeben, so dass ein zuverlässiges Erfassen der Bildinformationen auf technisch einfache Weise gewährleistet ist.

Diese Aufgabe wird gemäß der technischen Lehre des Anspruchs 1 bzw. des Anspruchs 14 gelöst.

Erfindungsgemäß wird von dem Steuermittel ein zuvor ermittelter Parameter, der für die jeweilige Bildvorlage spezifisch ist, dazu verwendet, einen bestimmten Zeitpunkt festzulegen. Dieser Zeitpunkt wird von dem Steuermittel zum Ansteuern des Lichtdetektors verwendet, um die Bildinformationen der jeweiligen Bildvorlage zu erfassen. Bestimmte Eigenschaften der jeweiligen Bildvorlage können somit dazu verwendet werden, den Lichtdetektor in Abhängigkeit von dieser Bildvorlageneigenschaft anzusteuern, um die Bildinformationen zu erfassen. Auf besonders einfache Weise kann dadurch ein Übersteuern des Lichtdetektors unabhängig von der Ansteuerung der Lichtquelle realisiert werden.

In einer vorteilhaften Ausgestaltung der Erfindung enthält die Vorrichtung ein Abtastmittel, mit dem die Bildvorlage abgetastet werden kann. Dabei können mittels des Abtastmittels bestimmte Eigenschaften der Bildvorlage ermittelt werden. Das Steuermittel ist zusätzlich so ausgestaltet, dass es den Parameter, der für die Bildvorlage spezifisch ist, mittels dieser ermittelten Eigenschaften der Bildvorlage ermittelt. Auf diese Weise ist ein einfaches Festlegen des Parameters möglich.

In einer weiteren vorteilhaften Ausgestaltung der Erfindung ist dem Parameter, der für die Bildvorlage spezifisch ist, eine niedrigste Dichte der Bildvorlage zugeordnet. Dadurch ist es möglich, einen optimierten Schutz des Lichtdetektors vor Übersteuerung zu gewährleisten, vor allem dann, wenn es sich bei der Bildvorlage um eine fotografisches Negativ handelt. Die niedrigste Dichte kann insbesondere mittels des Abtastmittels bestimmt werden.

In einer besonders vorteilhaften Ausgestaltung der Erfindung ist die Lichtquelle so aufgebaut, dass sie Licht mehrerer Farben ausgeben kann. Auf diese Weise ist ein Erfassen von Bildinformationen einer besonders großen Anzahl von Bildvorlagen, insbesondere im Vergleich zu einem sequenziellen Ausgeben mehrerer Farben durch die Lichtquelle, möglich.

Es ist weiterhin vorteilhaft, in der erfindungsgemäßen Vorrichtung mehrere Lichtdetektoren vorzusehen, mit denen Licht mehrerer Farben detektiert werden kann. Diese mehreren Lichtdetektoren können dabei insbesondere flächenförmig ausgestaltet sein, um Licht, mit dem eine flächenförmige Bildvorlage belichtet wurde, gleichzeitig detektieren zu können. Die Lichtdetektoren sind dabei vorteilhafterweise so ausgestaltet und angeordnet, dass jeder Lichtdetektor Licht einer einzigen Farbe, mit der die Bildvorlage belichtet wurde, detektiert. Dadurch ist es vorteilhafterweise möglich, ein paralleles, gleichzeitiges Detektieren der Bildinformationen in verschiedenen Farben zu ermöglichen. Eine hohe Geschwindigkeit beim Erfassen der Bildinformationen bei gleichzeitig immer gleicher spektraler Verteilung des Lichts, mit dem die Bildvorlage beleuchtet wird, kann gewährleistet werden.

Vorteilhafterweise ermittelt das Steuermittel für mehrere Farben Parameter, die für die Bildvorlage in den mehreren Farben spezifisch sind. Die Ermittlung dieser Parameter kann auf der Grundlage von Eigenschaften der Bildvorlage erfolgen, die von dem Abtastmittel für die mehreren Farben ermittelt wurden. Insbesondere sind diesen bildvorlagen- und farbspezifischen Parametern, die jeweils niedrigsten Dichten der Bildvorlagen in den mehreren Farben zugeordnet. Dadurch ist es möglich, einen weiter optimierten Schutz des Lichtdetektors, der zum Detektieren von Licht mehrerer Farben in der Lage ist, vor Übersteuerung zu gewährleisten.

In einer besonders vorteilhaften Ausgestaltung der Erfindung wird die Lichtquelle in Abhängigkeit von der höchsten der jeweils niedrigsten Dichten der Bildvorlage aktiviert. Die niedrigsten Dichten der anderen Farben werden dabei zum Ansteuern der Lichtquelle nicht verwendet. Somit ist ein einfaches Ansteuern der Lichtquelle sowie ein sicheres und genaues Belichten der Bildvorlage und Erfassen der Bildinformationen möglich.

Vorteilhafterweise ist das Ausgeben von Licht durch die Lichtquelle beendet, wenn die Lichtdetektoren zum Weiterverarbeiten, insbesondere zum Auslesen der erfassten Bildinformationen, von dem Steuermittel angesteuert werden. Dadurch kann gewährleistet werden, dass nur solches Licht detektiert wird, das tatsächlich zum Erfassen der Bildinformationen der Bildvorlage dient. Dabei können einfachheitshalber auch solche Lichtdetektoren eingesetzt werden, die beim Auslesen der erfassten Bildinformationen weiterhin Licht detektieren, sofern Licht auf sie auftrifft.

Eine besonders einfache Ansteuerung der Lichtquelle, um das Ausgeben von Licht zu beenden, lässt sich dann ermöglichen, wenn das Ausgeben von Licht für die mehreren Farben gleichzeitig beendet wird. Die Lichtquelle wird daher vorteilhafterweise entsprechend von dem Steuermittel angesteuert.

Beim sequenziellen Erfassen von Bildinformationen mehrerer Bildvorlagen ist es besonders vorteilhaft, die jeweilige Leuchtdauer der Lichtquelle zum Ausgeben von Licht beim Erfassen der Bildinformationen von Bildvorlage zu Bildvorlage neu festzulegen. Für jede einzelne Bildvorlage kann somit eine optimale Leuchtdauer abhängig von den zuvor ermittelten Parametern festgelegt werden. Damit ist ein optimiertes Erfassen der Bildinformationen mehrerer Bildvorlagen bei gleichzeitig hoher Erfassungsrate gegeben. Dies gilt insbesondere im Vergleich zu einer jeweils konstanten Leuchtdauer beim Erfassen der Bildinformationen mehrerer Bildvorlagen. Gleichzeitig kann das Übersteuern des Lichtdetektors verhindert werden. Die Leuchtdauer der Lichtquelle für die mehreren Farben kann vorteilhafterweise für die jeweilige Bildvorlage gleich bleiben. Eine einfache Ansteuerung der Lichtquelle ist somit weiterhin gewährleistet.

Weitere vorteilhafte Ausgestaltungen der Erfindung können den abhängigen Ansprüchen entnommen werden.

Im Folgenden werden die Erfindung und ihre Vorteile an Hand von Zeichnungen und Ausführungsbeispielen beschrieben.

Es zeigen:
- Fig. 1: ein Ausführungsbeispiel einer erfindungsgemäßen Vorrichtung zum Erfassen von Bildinformationen einer Bildvorlage und
- Fig. 2: ein Zeitdiagramm einer Ansteuerung der Lichtquelle und des Lichtdetektors der Vorrichtung gemäß des Ausführungsbeispiels der Fig. 1.

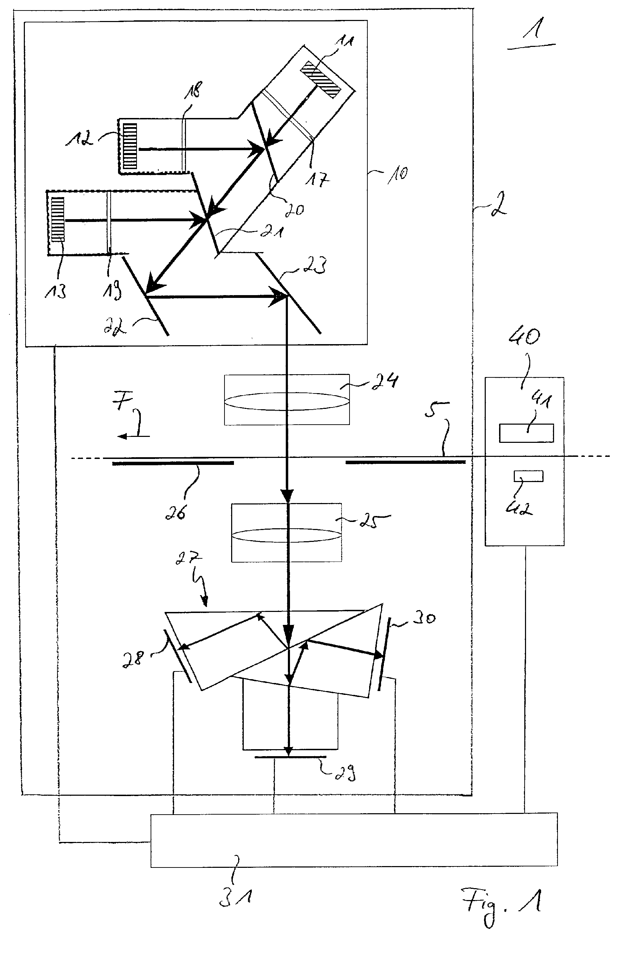

Die Fig. 1 zeigt das Ausführungsbeispiel einer erfindungsgemäßen Vorrichtung 1 zum Erfassen von Bildinformationen von Bildvorlagen. Die erfindungsgemäße Vorrichtung ist hier ein Scanner 1 zum Abtasten von fotografischem Film 5. Dieser ist hier eine Aneinanderreihung einer Vielzahl von Filmstreifen, die mehrere, nebeneinander angeordnete, auf den Film aufbelichtete Bilder enthalten. Der fotografische Film 5 ist hier ein Kleinbild-Negativfilm.

Der Scanner 1 enthält einen Mainscanner 2, mit dem die einzelnen Bildvorlagen des fotografischen Films hochaufgelöst abgetastet werden können. Des Weiteren enthält der Scanner 1 einen Prescanner 40, mit dem die einzelnen Bildvorlagen des fotografischen Films niedrigaufgelöst abgetastet werden. Der fotografische Film wird in einer Filmvorschubrichtung F von nicht dargestellten Transportmitteln durch den Prescanner 40 und den Mainscanner 2 transportiert. In Filmlaufrichtung F betrachtet, ist der Prescanner 40 vor dem Mainscanner 2 angeordnet. In dem Prescanner 40 wird der Film 5 durch eine Lichtquelle 41 beleuchtet und ein jeweils zeilenförmiger Abschnitt des Films 5 auf Sensorzeilen eines Lichtdetektors 42 abgebildet. Die Lichtquelle 41 enthält im vorliegenden Ausführungsbeispiel eine Vielzahl von Leuchtdioden, die mehrfarbiges Licht in den Grundfarben blau, grün und rot ausgeben. Auf die Sensorzeilen des Lichtdetektors 42 wird dementsprechend ein Blau-, Grün- und Rotauszug jeder Zeile des abgetasteten Filmes 5 abgebildet. Durch das Abtasten des fotografischen Filmes 5 durch den Prescanner 40 lassen sich unter anderem die Bildpositionen der auf dem fotografischen Film 5 enthaltenen Bildvorlagen sowie andere film- und bildvorlagenspezifische Daten ermitteln. Mit diesen Daten können dann Parameter für den Mainscanner und eine digitale Signalverarbeitung festgelegt werden. Zur Verarbeitung der von dem Prescanner 40 ermittelten Parameter ist der Prescanner 40 mit einem Steuermittel 31 verbunden. Die ermittelten Daten werden von dem Prescanner 40 an das Steuermittel 31 übermittelt. Zur Entkopplung von Prescanner 40 und Mainscanner 2 kann zwischen dem Prescanner 40 und dem Mainscanner 2 eine Filmschlaufe vorgesehen sein, die im vorliegenden Ausführungsbeispiel einfachheitshalber nicht dargestellt ist.

Der Mainscanner 2 enthält eine Lichtquelle 10 zum Ausgeben von mehrfarbigem Licht. Die Lichtquelle 10 kann beispielsweise weißes Licht ausgeben. Dazu kann sie insbesondere weiße Leuchtdioden oder eine Halogenlampe enthalten. Für die Zwecke der vorliegenden Erfindung kann vor allem die Halogenlampe vorteilhafterweise in Verbindung mit einem mechanischen Verschluss eingesetzt werden. Die Lichtquelle 10 gibt hier Licht in den Grundfarben blau, grün und rot aus. Dazu enthält sie ein erstes Leuchtdiodenarray 11 mit einer Vielzahl von blauen Leuchtdioden, ein zweites Leuchtdiodenarray 12 mit einer Vielzahl von grünen Leuchtdioden und ein drittes Leuchtdiodenarray 13 mit einer Vielzahl von roten Leuchtdioden. Die von dem ersten Leuchtdiodenarray 11 ausgegebene blaue Lichtstrahlung wird auf ein erstes Filter 17 weitergegeben, das bestimmte Spektralbereiche des Lichts absorbiert, die nicht zum benötigten blauen Spektralbereich gehören. Das von dem zweiten Leuchtdiodenarray 12 ausgegebene grüne Licht wird auf ein zweites Filter 18 gegeben, das bestimmte Wellenlängenbereiche absorbiert, die nicht zum benötigten grünen Wellenlängenbereich gehören. Die von dem dritten Leuchtdiodenarray 13 ausgegebene rote Lichtstrahlung wird auf ein drittes Filter 19 gegeben, das bestimmte Wellenlängenbereiche absorbiert, die nicht zum benötigten roten Wellenlängenbereich gehören. Die von dem ersten Filter 17 durchgelassene Lichtstrahlung trifft anschließend auf einen ersten dichroitischen Strahlkombinierer 20, der die blaue Lichtstrahlung mit der von dem zweiten Filter 18 durchgelassenen grünen Lichtstrahlung kombiniert, die ebenfalls auf den ersten dichroitischen Strahlkombinierer gerichtet ist. Die kombinierte blaue und grüne Lichtstrahlung wird anschließend auf einen zweiten dichroitischen Strahlkombinierer 21 weitergeleitet, der die kombinierte blaue und grüne Lichtstrahlung mit der von dem dritten Filter 19 durchgelassenen roten Lichtstrahlung kombiniert, die ebenfalls auf den zweiten dichroitischen Strahlkombinierer gerichtet ist. Das vollständig kombinierte mehrfarbige Licht in den Farben rot, grün und blau wird anschließend von einem ersten Reflektor 22 auf einen zweiten Reflektor 23 geleitet und von dem zweiten Reflektor 23 aus der Lichtquelle 10 ausgegeben. Das Steuermittel 31 ist mit der Lichtquelle 10 verbunden, um das Ausgeben von Licht zu steuern.

Das aus der Lichtquelle 10 ausgegebene Licht wird über ein Kondensorobjektiv 24 auf die abzutastende Bildvorlage des fotografischen Films 5 geleitet. Der fotografische Film 5 ist dazu auf einer Filmbühne 26 geführt. Das durch die abzutastende Bildvorlage hindurchtretende Licht wird auf ein Abbildungsobjektiv 25 und anschließend auf eine Prismenoptik 27 geleitet. Die Prismenoptik 27 spaltet das auf sie geleitete Licht in die Farbbestandteile in den drei Grundfarben rot, grün und blau auf. Der blaue Farbanteil des Lichts wird von der Prismenoptik 27 auf ein erstes CCD-Array 28, der grüne Farbanteil des Lichts auf ein zweites CCD-Array 29 und der rote Farbanteil des Lichts auf ein drittes CCD-Array 30 umgelenkt. Die drei CCD-Arrays 28, 29, 30 stellen einen Lichtdetektor zum Detektieren von Licht dar, mit dem die Bildvorlage belichtet wurde. Mittels der drei CCD-Arrays 28, 29 30 werden die Bildinformationen, die in der abgetasteten Bildvorlage enthalten sind, hochaufgelöst ermittelt. Die drei CCD-Arrays 28, 29, 30 sind mit dem Steuermittel 31 verbunden und übermitteln an dieses die von ihnen erfassten Bilddaten.

Im vorliegenden Ausführungsbeispiel sind drei LED-Arrays und drei CCD-Arrays zum Ausgeben und Erfassen von Licht in den drei Grundfarben rot, grün und blau vorhanden. Es ist auch möglich, zusätzliche Farbkanäle zum Erfassen der Bildinformationen der Bildvorlage in dem Mainscanner 2 vorzusehen. Dies kann insbesondere ein zusätzlicher Farbkanal für infrarotes (IR) Licht sein. Dazu könnte in der Lichtquelle 10 ein zusätzliches LED-Array vorgesehen sein, das Licht im infraroten Spektralbereich emittiert. Der Lichtdetektor enthält dann ein zusätzliches CCD-Array, mit dem das durch die Bildvorlage hindurchgeleitete, infrarote Licht detektiert werden soll. Mit einem solchen infraroten Farbkanal können insbesondere Beschädigungen der Bildvorlage, wie z. B. Kratzer, erkannt und bei der Erfassung der Bildinformationen der Bildvorlage verwendet werden.

Die vorliegende Erfindung betrifft insbesondere das Ansteuern der Lichtquelle 10 und der CCD-Arrays 28, 29 und 30 durch das Steuermittel 31. Das Steuermittel 31 ist dabei so ausgestaltet, dass es für diese Ansteuerung bildvorlagenspezifische Parameter verwendet, die von dem Prescanner 40 bei der Vorabtastung der Bildvorlage ermittelt wurden. Beim Abtasten von fotografischen Negativen, wie dies im vorliegenden Ausführungsbeispiel der Fall ist, sind solche bildvorlagenspezifische Parameter insbesondere die minimalen Dichten der Bildvorlage in den drei Grundfarben rot, grün und blau. Diese minimalen Dichten werden von dem Steuermittel 31 auf Grund der von dem Prescanner 40 ermittelten Vorabtastwerte der Bildvorlage bestimmt. Die minimalen Dichten in den drei Grundfarben rot, grün und blau geben diejenigen Dichten des abzutastenden Filmnegatives an, die Stellen des Filmnegatives zugeordnet sind, die - bezogen auf die jeweilige Grundfarbe - am wenigsten belichtet wurden. Das bedeutet, an diesen Stellen ist - bezogen auf die jeweilige Grundfarbe - das Filmnegativ am wenigsten geschwärzt. Die minimalen Dichten sind somit relevant für das Vermeiden einer Übersteuerung des jeweiligen CCD-Arrays 28, 29, 30. Bei der Belichtung des Filmnegatives mit der Lichtquelle 10, geht durch die Stellen mit den minimalen Dichten das meiste Licht hindurch. Die Erfassung der Bildinformationen des Negatives wird somit vorteilhafterweise auf die minimalen Dichten abgestellt.

Im vorliegenden Ausführungsbeispiel erfolgt die Ansteuerung der Lichtquelle 10 durch das Steuermittel 31 für die jeweiligen LED-Arrays 11, 12 und 13 jeweils gleich. Das heißt, die drei LED-Arrays 11, 12, 13 beginnen und beenden ihre Emission von Licht jeweils zu gleichen Zeitpunkten. Die Dauer der Lichtausgabe durch die Lichtquelle 10 wird dabei durch das Steuermittel 31 für das abzutastende Filmnegativ individuell festgelegt. Die Ansteuerung der CCD-Arrays 28, 29 und 30 durch das Steuermittel 31 erfolgt auf Grund der zuvor ermittelten minimalen Dichten in den drei Grundfarben rot, grün und blau. Abhängig von diesen minimalen, d. h. niedrigsten Dichten steuert das Steuermittel 31 die CCD-Array 28, 29, 30 mittels eines Resetimpulses an, mit dem das Detektieren von Licht, mit dem das abzutastende Filmnegativ belichtet wurde, gestartet wird. Nach Empfangen eines solchen Resetimpulses werden die Speicher des CCD-Arrays auf Null gesetzt, d. h. geleert, so dass die anschließend von dem CCD-Array empfangene Lichtmenge dem abzutastenden Filmnegativ zugeordnet werden kann.

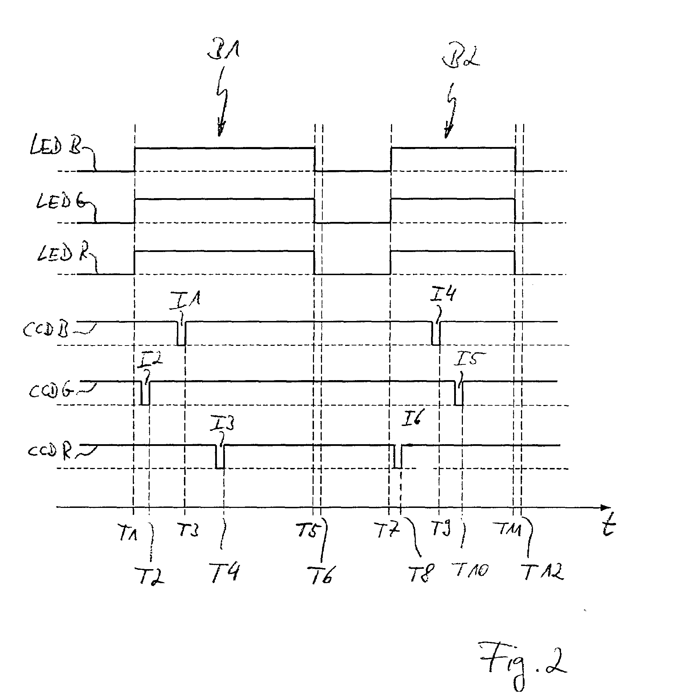

Zur Verdeutlichung zeigt Fig. 2 ein Zeitdiagramm einer Ansteuerung der drei LED-Arrays der Lichtquelle 10 und der drei CCD-Arrays 28, 29 und 30 der Vorrichtung 1 gemäß des Ausführungsbeispiels der Fig. 1. Fig. 2 zeigt Ansteuersignale, die von dem Steuermittel 31 erzeugt und zur Ansteuerung der LED-Arrays und CCD-Arrays verwendet werden. Die Fig. 2 zeigt die Ansteuersignale zum Abtasten eines ersten Bildes B1 und eines zweiten Bildes B2, die auf dem Film 5 enthalten sind. Das Ansteuersignal für das blaue LED-Array 11 ist in der Fig. 2 mit LED B bezeichnet. Das Ansteuersignal für das grüne LED-Array 12 ist in der Fig. 2 mit LED G bezeichnet. Das Ansteuersignal für das rote LED-Array 13 ist mit LED R bezeichnet. Des Weiteren ist das Ansteuersignal für das blaue CCD-Array 28 mit CCD B, das Ansteuersignal für das grüne CCD-Array 29 mit CCD G und das Ansteuersignal für das rote CCD-Array 30 mit CCD R bezeichnet.

In der Horizontalen (Ordinate) ist eine Zeitachse t aufgezeichnet. Auf dieser Zeitachse sind verschiedene Zeitpunkte eingetragen, die bestimmte Ereignisse kennzeichnen, die im Folgenden weiter erläutert werden. Zu einem ersten Zeitpunkt T1 erfolgt ein Ansteuern der Lichtquelle 10 durch das Steuermittel 31. Die drei Leuchtdioden-Arrays 11, 12 und 13 erhalten ein Signal, um die Ausgabe von Licht zu starten. Zu einem zweiten Zeitpunkt T2 hat das CCD-Array 29 einen Resetimpuls 12 erhalten, mit dem das grüne CCD-Array 29 zum Erfassen des Grünanteils des abzutastenden Filmnegatives auf Null gesetzt wird. Ein solcher Resetimpuls ist bei den hier verwendeten CCD's vorteilhaft, da diese immer dann Licht detektieren, wenn Licht auf ihre fotoempfindlichen Flächen auftreffen. Unmittelbar nach Beginn der Ausgabe von Licht zum Zeitpunkt T1 empfangen daher die CCD-Arrays 28, 29, 30 Licht, das allerdings zunächst nicht zum Erfassen der Bildinformationen des abzutastenden Filmnegatives verwendet werden soll. Erst nach Empfangen des Resetimpulses von dem jeweiligen CCD-Array detektiertes Licht soll zum Erfassen der Bildinformationen des abzutastenden Filmnegatives verwendet werden.

In dem Zeitdiagramm gemäß der Fig. 2 erhält das blaue CCD-Array 28 zu einem Zeitpunkt T3 einen Resetimpuls 11. Ab diesem Zeitpunkt T3 von dem CCD-Array 28 empfangenes Licht wird zum Erfassen der Bildinformation des abzutastenden Filmnegatives verwendet. Zu einem vierten Zeitpunkt T4 erhält das rote CCD-Array 30 einen Resetimpuls 13. Die Zeitpunkte T2, T3 und T4 wurden von dem Steuermittel 31 auf der Grundlage der zuvor ermittelten minimalen Dichten des abzutastenden Filmnegatives in den drei Grundfarben rot, grün und blau festgelegt. Beim Filmnegativ B1 ist die Dichte im grünen Farbbereich größer als die Dichte im blauen Farbbereich. Die Dichte im blauen Farbbereich ist wiederum größer als die Dichte im roten Farbbereich. Daher erhält das grüne CCD-Array 29 als erstes seinen Resetimpuls 12 bevor als zweites das blaue CCD-Array 28 seinen Resetimpuls 11 und anschließend das rote CCD-Array 30 seinen Resetimpuls 13 erhält.

Zu einem fünften Zeitpunkt T5 wird die Lichtquelle 10 von dem Steuermittel 31 erneut angesteuert, um die Emission von Licht durch die drei LED-Arrays 11, 12 und 13 zu beenden. Nach dem Beenden der Lichtemission durch die Lichtquelle 10 fällt kein weiteres Licht auf die drei CCD-Arrays 28, 29 und 30, so dass auch keine weitere Bildinformationen des Filmnegatives B1 erfasst werden können. Die von dem blauen CCD-Array 28 zwischen dem dritten Zeitpunkt T3 und dem fünften Zeitpunkt T5 empfangene Lichtmenge ist somit dem blauen Farbanteil des abgetasteten Filmnegatives B1 zugeordnet. Die von dem grünen CCD-Array 29 zwischen dem Zeitpunkt T2 und dem Zeitpunkt T5 empfangene Lichtmenge ist dem grünen Farbanteil der Bildinformationen des Filmnegatives B1 und die zwischen dem Zeitpunkt T4 und dem Zeitpunkt T5 von dem roten CCD-Array 30 empfangene Lichtmenge dem roten Farbanteil der Bildinformationen des Filmnegatives B1 zugeordnet. Zu einem sechsten Zeitpunkt T6 werden dann die drei CCD-Arrays 28, 29, 30 ausgelesen. Dabei werden die von den CCD-Arrays erzeugten Bilddaten an das Steuermittel 31 weitergeleitet. Das Steuermittel 31 ermittelt aus diesen Bilddaten die hochaufgelösten Bildinformationen des Negatives B1. Diese Art der Ermittlung der Bildinformationen auf Grund der von den CCD-Arrays übermittelten Bilddaten ist bekannt und braucht daher an dieser Stelle nicht weiter erläutert zu werden. Die Zeitdauer zwischen dem Zeitpunkt T1 und dem Zeitpunkt T5, d. h. diejenige Zeitdauer, in der die Lichtquelle 10 Licht ausgibt, wird von dem Steuermittel 31 in Abhängigkeit von der höchsten, d. h. der dichtesten, der minimalen Dichten des Negatives B1 festgelegt. Vorteilhafterweise wird die Lichtquelle 10 zum Abtasten des jeweiligen Bildes unmittelbar vor dem Ausgeben des - bezogen auf das jeweilige Bild - ersten Resetimpulses (in der Fig. 2 der Resetimpuls 12) eingeschaltet. Auf diese Weise kann sichergestellt werden, dass die LED-Arrays der Lichtquelle 10 nur eine minimal erforderliche Dauer leuchten. Dies reduziert die Verlustleistung der Lichtquelle 10 und gewährleistet eine minimal erforderliche Abtastzeit beim Abtasten eines Bildes.

In dem Zeitdiagramm gemäß der Fig. 2 sind weiterhin die Ansteuersignale für die LED-Arrays 11, 12, 13 und die CCD-Arrays 28, 29, 30 zum Abtasten des zweiten Bildes B2 dargestellt. Nach dem Auslesen der dem ersten Bild B1 zugeordneten Bilddaten aus den CCD-Arrays 28, 29, 30 ist der Mainscanner 2 zum Abtasten des zweiten Bildes B2 bereit. Dieses Abtasten erfolgt hier mit dem Ansteuern der drei LED-Arrays 11, 12, 13 zu einem siebten Zeitpunkt T7. Zu diesem Zeitpunkt T7 beginnt die Lichtquelle 10 mit dem Ausgeben des mehrfarbigen Lichtes auf das Filmnegativ B2. Zu einem achten Zeitpunkt T8 hat das rote CCD-Array 30 von dem Steuermittel 31 einen Resetimpuls 16 erhalten, mit dem die Speicher des CCD-Arrays 30 auf Null gesetzt werden, um mit dem Detektieren von Licht zum Erfassen von Bildinformationen des Negatives B2 zu beginnen. Zu einem neunten Zeitpunkt T9 hat das blaue CCD-Array 28 einen Resetimpuls 14 und zu einem zehnten Zeitpunkt T10 hat das grüne CCD-Array 29 einen Resetimpuls 15 zum Rücksetzen seiner Speicher erhalten. Im vorliegenden Ausführungsbeispiel wird der Resetimpuls 16 vor dem Resetimpuls 14 und der Resetimpuls 14 wiederum vor dem Resetimpuls 15 von dem Steuermittel 31 ausgegeben. Dies bedeutet, dass die Dichte des Negatives B2 im roten Farbbereich am größten ist. Die Dichte des Negatives B2 ist im grünen Farbbereich die geringste und die Dichte des Negatives 2 im blauen Farbbereich liegt zwischen den Dichten im roten und grünen Farbbereich. Zu einem elften Zeitpunkt T11 erhalten die LED-Arrays 11, 12, 13 einen Impuls zum Beenden der Lichtemissionen. Ab diesem Zeitpunkt T11 wird somit von den drei CCD-Array 28, 29, 30 kein weiteres Licht zum Erfassen von Bildinformationen des Negatives B2 detektiert. Zu einem zwölften Zeitpunkt T12 werden die drei CCD-Arrays 28, 29, 30 ausgelesen. Sie übermitteln dabei die jeweiligen Bilddaten an Steuermittel 31. Die Leuchtdauer der LED-Arrays 11, 12, 13 zwischen den Zeitpunkten T7 und T11 ist auch hier an die höchste, d. h. die dichteste, der minimalen Dichten des Negatives B2 in den drei Grundfarben rot, grün und blau angepasst. Das Einschalten der Lichtquelle 10 zu dem Zeitpunkt T7 erfolgt unmittelbar vor dem Absetzen des ersten Resetimpuls 16 durch das Steuermittel 31.

Die Zeitdauer zum Ausgeben von Licht durch die Lichtquelle 10 zum Abtasten des Negatives B2 ist im vorliegenden Ausführungsbeispiel kürzer, als die Zeitdauer zum Ausgeben von Licht zum Abtasten des Negatives B1. Dies hat seinen Grund darin, dass die höchste der minimalen Dichten des Negatives B2 niedriger ist, als die höchste der minimalen Dichten des Negatives B1. Im Vergleich zu einer konstanten Leuchtdauer der Leuchtdioden der Lichtquelle 10 beim Abtasten verschiedener Bildvorlagen hat das Einstellen der verschiedenen Leuchtdauern, abhängig von bildvorlagenspezifischen Parametern, insbesondere der minimalen Dichten der jeweiligen Bildvorlage, den Vorteil, dass dadurch ein schnelleres Abtasten einer Vielzahl von Bildvorlagen möglich ist.

Im beschriebenen Ausführungsbeispiel wurden Fotonegative abgetastet, wobei minimale Dichten der jeweiligen Negative zum Einstellen von Zeitpunkten verwendet wurden, die zum Erfassen der Bildinformationen dienen. Fotografische Negative werden in einem Durchleuchtverfahren abgetastet, bei dem die Lichtquelle auf der einen Seite des Negatives und der Lichtdetektor auf der anderen Seite des Negatives angeordnet sind. Als Bildvorlage können allerdings auch Objekte dienen, die das auf sie gerichtete Abtastlicht reflektieren. Dies können z. B. fotografische Papierbilder sein, die gescannt werden sollen. In diesem Fall ist es vorteilhaft, als bildvorlagenspezifischen Parameter eine maximale Reflexion von Licht zu verwenden, die von der abzutastenden Bildvorlage reflektiert wird.

Dieser Parameter der maximalen Reflexion von Licht kann ebenfalls durch eine Vorabtastung der Bildvorlage ermittelt werden.

Die erfindungsgemäße Ansteuerung der CCD-Arrays in Abhängigkeit von den bildvorlagenspezifischen Parametern, insbesondere einer minimalen Dichte des Negativs, bei gleichzeitig konstanter Leuchtdauer der verschiedenfarbigen Leuchtdioden der Lichtquelle 10 ist insbesondere deshalb vorteilhaft, da die spektrale Verteilung des Lichts, das beim Erfassen der Bildinformationen auf die jeweiligen Negative gerichtet ist, jeweils gleich ist. Die spektrale Verteilung des Lichts, mit dem die CCD's beleuchtet werden, ist somit immer gleich. Dies ist insbesondere deshalb wichtig, da die spektrale Trennung der verschiedenen Farben der Leuchtdioden nicht eindeutig gewährleistet werden kann. Die Leuchtdioden emittieren nicht nur Licht in der Wellenlänge, die optimalerweise für die Erfassung der Bildinformationen in dem jeweiligen Wellenlängenbereich gefordert ist. Vielmehr emittieren die Leuchtdioden auch Licht in anderen, nicht erwünschten Wellenlängenbereichen. Auch wenn es möglich ist, Filter einzusetzen, wie beispielsweise die Filter 17, 18 und 19, mit denen der Emissionswellenlängenbereich des jeweiligen LED-Arrays 11, 12, 13 begrenzt werden kann, ist es nicht möglich, eine optimale Begrenzung durchzuführen. Diese Filter 17, 18, 19 dürfen nicht zu schmal ausgelegt werden, da ansonsten die Menge von Licht, die von der Lichtquelle 10 emittiert wird, zu stark beschnitten wird. In diesem Fall trifft nicht mehr genügend Licht auf das jeweilige Negativ und anschließend auf den Lichtdetektor auf. Beim Einstellen verschiedener Leuchtdauern der verschiedenfarbigen LED-Arrays in Abhängigkeit von bildvorlagenspezifischen Parametern, wie dies beim Stand der Technik beim Abtasten einer Bildvorlage geschieht, variiert die Leuchtdauer der Leuchtdioden in den verschiedenen Farben von Bildvorlage zu Bildvorlage. Die Leuchtdauer beim Abtasten einer Bildvorlage ist nicht für alle Leuchtdioden gleich. Dadurch ist auch die spektrale Verteilung des Lichtes, mit dem die CCD's beleuchtet werden, von Bildvorlage zu Bildvorlage unterschiedlich. Dies kann zu nachteiligen Verzerrungen bei der Erfassung der Bildinformationen der Bildvorlagen führen.

## Patentansprüche

1. Vorrichtung (1) zum Erfassen von Bildinformationen einer Bildvorlage (5) mit
- einer Lichtquelle (10) zum Ausgeben von Licht zum Belichten der Bildvorlage (5),
- einem Lichtdetektor (28-30) zum Detektieren von Licht, mit dem die Bildvorlage (5) belichtet wurde, und
- einem Steuermittel (31) zum Steuern des Erfassens der Bildinformationen der Bildvorlage (5),
**dadurch gekennzeichnet, dass**
- das Steuermittel (31) so ausgestaltet ist, dass es einen bestimmten Zeitpunkt (T2-T4, T8-T10) in Abhängigkeit von einem zuvor ermittelten Parameter festlegt, der für die Bildvorlage (5) spezifisch ist, und den Lichtdetektor (28-30) zum Erfassen von Bildinformationen der Bildvorlage (5) zu dem bestimmten Zeitpunkt (T2-T4, T8-T10) ansteuert.

2. Vorrichtung gemäß Anspruch 1, **dadurch gekennzeichnet, dass** das Steuermittel (31) den bestimmten Zeitpunkt (T2-T4, T8-T10) so feststellt und den Lichtdetektor (28-30) so ansteuert, dass der Lichtdetektor (28-30) in dem Zeitpunkt (T2-T4, T8-T10) mit dem Detektieren von Licht zum Erfassen von Bildinformationen der Bildvorlage (5) beginnt.

3. Vorrichtung gemäß Anspruch 1 oder Anspruch 2, **dadurch gekennzeichnet, dass** sie ein Abtastmittel (40) zum Abtasten der Bildvorlage (5) aufweist und das Steuermittel (31) so ausgestaltet ist, dass es mittels von dem Abtastmittel (40) ermittelter Eigenschaften der Bildvorlage (5) den Parameter, der für die Bildvorlage (5) spezifisch ist, ermittelt.

4. Vorrichtung gemäß Anspruch 1 bis Anspruch3, **dadurch gekennzeichnet, dass** der bildvorlagenspezifische Parameter einer niedrigsten Dichte der Bildvorlage (5) zugeordnet ist.

5. Vorrichtung gemäß Anspruch 1 bis Anspruch 4, **dadurch gekennzeichnet, dass** mittels der Lichtquelle (10) Licht in mehreren Farben gleichzeitig ausgebbar ist.

6. Vorrichtung gemäß Anspruch 5, **dadurch gekennzeichnet, dass** mehrere Lichtdetektoren (28-30) zum Detektieren von Licht mehrerer Farben vorhanden sind und jeder der mehreren Lichtdetektoren (28-30) zum Detektieren von Licht einer einzigen Farbe vorgesehen ist.

7. Vorrichtung gemäß Anspruch 6, **dadurch gekennzeichnet, dass** sie ein Verteilmittel (27) zum farbselektiven Verteilen des mehrfarbigen Lichts auf die Lichtdetektoren (28-30) aufweist.

8. Vorrichtung gemäß Anspruch 3, **dadurch gekennzeichnet, dass** das Steuermittel (31) so ausgestaltet ist, dass es mittels von dem Abtastmittel (40) für mehrere Farben ermittelter Eigenschaften der Bildvorlage (5) Parameter ermittelt, die für die mehreren Farben der Bildvorlage (5) spezifisch sind.

9. Vorrichtung gemäß Anspruch 8, **dadurch gekennzeichnet, dass** die bildvorlagen- und farbspezifischen Parameter den jeweils niedrigsten Dichten der Bildvorlage (5) in den mehreren Farben zugeordnet sind.

10. Vorrichtung gemäß Anspruch 5 und Anspruch 9, **dadurch gekennzeichnet**, dassdas Steuermittel (31) so ausgestaltet ist, dass es die Lichtquelle (10) in Abhängigkeit von der höchsten der jeweils niedrigsten Dichten der Bildvorlage (5) aktiviert.

11. Vorrichtung gemäß Anspruch 6, **dadurch gekennzeichnet, dass** das Steuermittel (31) so ausgestaltet ist, dass es zum Weiterverarbeiten der erfassten Bildinformationen der Bildvorlage (5) die Lichtdetektoren (28 - 30) nach einem Beenden des Ausgebens von Licht ansteuert.

12. Vorrichtung gemäß Anspruch 11, **dadurch gekennzeichnet, dass** die Lichtquelle (10) mit dem Steuermittel (31) verbunden ist und das Steuermittel (31) weiterhin so ausgestaltet ist, dass das Ausgeben von Licht mittels der Lichtquelle (10) beim Erfassen der Bildinformationen der Bildvorlage (5) für die mehreren Farben gleichzeitig beendet wird.

13. Vorrichtung gemäß Anspruch 1 bis Anspruch 12, **dadurch gekennzeichnet, dass** das Steuermittel (31) so ausgestaltet ist, dass es die jeweilige Leuchtdauer der Lichtquelle (10) zum Ausgeben von Licht beim Erfassen von Bildinformationen mehrerer Bildvorlagen (5) von Bildvorlage (B1 ) zu Bildvorlage (B2) neu festlegt.

14. Verfahren zum Erfassen von Bildinformationen einer Bildvorlage (5), bei dem
- Licht zum Belichten der Bildvorlage (5) von einer Lichtquelle (10) ausgegeben wird,
- Licht, mit dem die Bildvorlage (5) belichtet wurde, von einem Lichtdetektor (28-30) detektiert wird und
- das Erfassen der Bildinformationen der Bildvorlage (5) von einem Steuermittel (31) gesteuert wird,
**dadurch gekennzeichnet, dass**
- das Steuermittel (31) einen bestimmten Zeitpunkt (T2-T4, T8-T10) in Abhängigkeit von einem zuvor ermittelten Parameter festlegt, der für die Bildvorlage (5) spezifisch ist, und der Lichtdetektor (28-30) zum Erfassen von Bildinformationen der Bildvorlage (5) zu dem bestimmten Zeitpunkt (T2-T4, T8-T10) von dem Steuermittel (31) angesteuert wird.
